# EUROPÄISCHE PATENTSCHRIFT

(11) **EP 2 981 980 B1**
(45) Veröffentlichungstag und Bekanntmachung des Hinweises auf die Patenterteilung: **18.05.2022**
(21) Anmeldenummer: 14728116.6
(22) Anmeldetag: 23.05.2014
(51) Int. Cl.: H01F 38/14, B60L 53/66, B60L 53/38, B60L 53/126, B60L 53/122, H01Q 13/24, H01Q 9/04, H01Q 21/06, H02J 7/00, H02J 7/02, H02J 50/10, H02J 50/80

(54) **INDUKTIVE LADEEINRICHTUNG, ELEKTROFAHRZEUG, LADESTATION UND VERFAHREN ZUM INDUKTIVEN LADEN**
INDUCTIVE CHARGING APPARATUS, ELECTRIC VEHICLE, CHARGING STATION AND METHOD OF INDUCTIVE CHARGING
APPAREIL CHARGEUR INDUCTIF, VÉHICULE ÉLECTRIQUE, STATION DE CHARGEMENT ET PROCÉDÉ DE CHARGEMENT INDUCTIF

(30) Priorität: 28.06.2013 DE 102013212736; 28.06.2013 DE 102013010975
(43) Veröffentlichungstag der Anmeldung: 10.02.2016
(73) Patentinhaber: Siemens Aktiengesellschaft, 80333 München (DE)
(72) Erfinder: FACKELMEIER, Andreas, 91177 Thalmässing (DE); KURZ, Fabian, 80807 München (DE); MÜLLER, Dominikus Joachim, 82223 Eichenau (DE); MÜLLER, Reiner, 86971 Peiting (DE); NAGEL, Robert, 30161 Hannover (DE); POPRAWA, Florian, 81825 München (DE)
(86) Internationale Anmeldenummer: PCT/EP2014/060648
(87) Internationale Veröffentlichungsnummer: WO 2014/206661

(56) Entgegenhaltungen:
- US-A- 6 154 005
- US-A1- 2001 035 734
- US-A1- 2013 093 387

## Beschreibung

Die Erfindung betrifft eine induktive Ladeeinrichtung, ein Elektrofahrzeug, eine Ladestation sowie ein Verfahren zum induktiven Laden.

Neben der kontaktgebundenen Möglichkeiten mittels Kabel eine Batterie, insbesondere eines Elektrofahrzeugs, mit Gleichoder Wechselstrom zu laden (conductive charging), ist es bekannt, mittels Induktion (inductive charging, wireless charging) Energie in eine Batterie, etwa eines Elektrofahrzeugs, zu übertragen.

Dabei gibt es, insbesondere beim induktiven Laden von Elektrofahrzeugen, drei wesentliche Parameter, die gleichermaßen zu berücksichtigen sind:
- die Position der Ladespule/n auf der Sekundärseite, d.h. die Position derjenigen Ladespule/n, welche mit der zu ladenden Batterie elektrisch kontaktiert sind, in Bezug zur Position der Ladespule/n auf der Primärseite, d.h. diejenige Seite, welche die zum Laden erforderliche Energie bereitstellt, etwa eine Ladestation zum Laden von Elektrofahrzeugen,
- eindeutige Identifizierung der Primärseite, etwa des über der/n Ladespule/n platzierten Elektrofahrzeugs,
- eindeutige, stabile und sichere Kommunikation zwischen Primärseite und Sekundärseite, etwa einer Ladestation und einem Elektrofahrzeug, während eines Ladevorgangs zwecks Verhinderung des "Übersprechens", etwa eines Elektrofahrzeugs zu einer in der nahen Umgebung befindlichen Primärseite einer einer weiteren Ladestation.

US 6,154,005 und US 2001/0035734 A1 zeigen induktive Ladeeinrichtungen zum induktiven Laden von Elektrofahrzeugen.

Um einen möglichst hohen Wirkungsgrad bei der induktiven Energieübertragung zu erreichen, ist es erstrebenswert, die jeweiligen Ladespulen des induktiven Ladesystems auf Primärseite und Sekundärseite so genau wie möglich zueinander zu positionieren.

Neben der Genauigkeit der Spulenplatzierung ist auch eine eindeutige, sichere Kommunikation zwischen Infrastruktur und Fahrzeug Voraussetzung für einen sicheren und effizienten Ladevorgang. Da das Elektrofahrzeug im Falle des induktiven Ladens nicht mittels eines Kabels mit der Infrastruktur verbunden ist, ist es zusätzlich wünschenswert, für die Kommunikation ein funkgebundenes System (wireless system) zu verwenden. Ein solches funkgebundenes System muss in diesem Szenario so gut wie möglich gegen Störeinflüsse von elektromagnetischen Wellen geschützt werden.

Hierzu ist es etwa beim induktiven Laden von Elektrofahrzeugen bekannt, dem Fahrer des Elektrofahrzeugs bei der Anfahrt zur Ladestation Navigationshilfe zu geben. Beispielsweise ist hierzu eine Antenne auf dem Dach des Elektrofahrzeugs verbaut. Ferner wäre es vorteilhaft, während des Ladens den Ladeleistungsfluss zu steuern. Eine zuverlässige Kommunikation auch während eines Ladevorgangs ist daher wünschenswert.

Es ist vor dem Hintergrund des Standes der Technik Aufgabe der Erfindung, eine Ladeeinrichtung zu schaffen, mittels welcher zum einen eine Positionierung der Ladespulen zu einer korrespondierenden Ladeeinrichtung präzise möglich ist. Ferner soll mit der Ladeeinrichtung eine zuverlässige Kommunikation während des Ladens ermöglicht sein. Ferner ist es Aufgabe der Erfindung, eine verbesserte Ladestation und ein verbessertes Elektrofahrzeug anzugeben. Aufgabe der Erfindung ist es zudem, ein verbessertes Verfahren zum induktiven Laden anzugeben.

Diese Aufgabe wird mit einer Ladeeinrichtung mit den in Anspruch 1 angegebenen Merkmalen, mit einem Elektrofahrzeug mit den in Anspruch 8 angegebenen Merkmalen, mit einer Ladestation mit den in Anspruch 9 angegebenen Merkmalen sowie mit einem Verfahren zum induktiven Laden mit den in Anspruch 10 angegebenen Merkmalen gelöst. Bevorzugte Weiterbildungen der Erfindung ergeben sich aus den zugehörigen Unteransprüchen, der nachfolgenden Beschreibung und der Zeichnung.

Die erfindungsgemäße Ladeeinrichtung ist eine induktive Ladeeinrichtung, d.h. eine Ladeeinrichtung zum induktiven Laden. Insbesondere ist die erfindungsgemäße Ladeeinrichtung zum induktiven Laden mit einer zu dieser korrespondierenden Ladeeinrichtung ausgebildet, d.h. von der erfindungsgemäßen Ladeeinrichtung wird induktiv Energie zur korrespondierenden Ladeeinrichtung übertragen und/oder induktiv von der korrespondierenden Ladeeinrichtung empfangen. Die induktive Ladeeinrichtung weist zumindest eine um eine Spulenachse gewundene induktive Ladespule sowie eine elektrische oder dielektrische Antenne auf. Die elektrische oder dielektrische Antenne ist in oder an der zumindest einen Ladespule und/oder innerhalb der zumindest einen Ladespule und/oder zwischen den Ladespulen angeordnet und/oder an einem Ort angeordnet, welcher parallel zur Spulenachse verschoben gegenüber einem Ort in einem Bereichs der Ladespule und/oder gegenüber einem Ort innerhalb der zumindest einen Ladespule und/oder gegenüber einem Ort zwischen den Ladespulen befindlich ist. D.h., die elektrische oder dielektrische Antenne ist an einem Ort angeordnet, welcher durch eine Verschiebung eines Ortes eines Bereiches der Ladespule, eines Ortes innerhalb der zumindest einen Ladespule oder eines Ortes zwischen den Ladespulen in einer Richtung parallel zur Spulenachse hervorgeht. Unter einer Verschiebung parallel zur Spulenachse im Sinne dieser Erfindung ist stets eine Verschiebung in Richtung der Spulenachse zu verstehen. Zweckmäßigerweise befindet sich zumindest ein Teil der elektrischen oder dielektrischen Antenne an einem Ort wie vorstehend angegeben. Vorzugsweise befindet sich der geometrische Schwerpunkt oder der physikalische Schwerpunkt der Antenne an einem Ort wie vorstehend angegeben.

Unter einer Spulenachse im Sinne dieser Erfindung ist eine gedachte Achse, im Falle von Flächenspulen die Wicklungsebenennormale oder Windungsebenennormale, zu verstehen. Im Falle geschraubter Ladespulen ist unter einer Spulenachse im Sinne dieser Erfindung die Schraubenlängsachse zu verstehen. Allgemein bezeichnet Spulenachse diejenige Achse, um welche die Wicklungen der Ladespule nahezu ausschließlich umfänglich oder radial verlaufen, abgesehen von ggf. auftretenden Korrekturen aufgrund der Wicklungsbreite oder der Wicklungsabstände selbst.

Unter einer elektrischen Antenne im Sinne dieser Erfindung ist insbesondere eine Antenne zu verstehen, die nicht überwiegend oder ausschließlich an die magnetische Komponente des elektromagnetischen Felds koppelt, vorzugsweise überwiegend und besonders bevorzugt nahezu ausschließlich an die elektrische Komponente des elektromagnetischen Feldes koppelt. Insbesondere ist unter einer elektrischen Antenne eine elektrische Dipolantenne zu verstehen. Zweckmäßig ist der Begriff der elektrischen Antenne von demjenigen einer magnetischen Antenne abzugrenzen, d.h. eine Rahmen- oder Spulenantenne soll vom Begriff der elektrischen Antenne nicht umfasst sein.

Mittels der erfindungsgemäßen induktiven Ladeeinrichtung ist es möglich, mittels der elektrischen oder dielektrischen Antenne während des Ladevorgangs zusätzlich einen Funkkanal zur Funkkommunikation im Nahfeld mit einer korrespondierenden Ladeeinrichtung aufzubauen. Aufgrund der zur Spulenachse parallel verschobenen Anordnung der elektrischen oder dielektrischen Antenne gegenüber Orten in Bereichen der zumindest einen Ladespule und/oder innerhalb der zumindest einen Ladespule oder Bereichen, welche zwischen den Ladespulen befindlich sind, und/oder der Anordnung der elektrischen oder dielektrischen Antenne in oder an der zumindest einen Ladespule und/oder innerhalb der zumindest einen Ladespule und/oder zwischen den Ladespulen ist die Antenne im oder nah dem induktiven Leistungsfluss angeordnet. Sobald also die zumindest eine induktive Ladespule der induktiven Ladeeinrichtung für einen Ladevorgang hinreichend positioniert ist, ist zugleich die Antenne für einen Kommunikationsvorgang mit einer korrespondierenden Ladeeinrichtung optimal ausgerichtet. Insbesondere bei der Nutzung miteinander korrespondierender erfindungsgemäßer Ladeeinrichtungen sowohl auf Primärseite als auch auf Sekundärseite ist mittels der erfindungsgemäßen Ladeeinrichtungen eine zuverlässige, sichere und eindeutige Kommunikation leicht bewerkstelligbar.

Umgekehrt lässt sich auch die Kommunikation mittels der Antenne nutzen, um eine zuverlässige Positionierung der jeweiligen Ladespulen der erfindungsgemäßen Ladeeinrichtungen zueinander zu erreichen. Denn wenn die Antennen zur zuverlässigen Kommunikation hinreichend nah zueinander positioniert sind, ist aufgrund der räumlichen Anordnung von Antenne und der zumindest einen Ladespule der jeweiligen erfindungsgemäßen Ladeeinrichtung eine zum induktiven Laden hinreichende relative Positionierung der Ladespulen der Ladeeinrichtungen zueinander gegeben.

Folglich bedingt eine geeignete Positionierung der Antenne der erfindungsgemäßen Ladeeinrichtung eine geeignete Positionierung der zumindest einen Ladespule der Ladeeinrichtung und umgekehrt. Insbesondere im Falle des induktiven Ladens von Elektrofahrzeugen mittels einer Ladestation erweist sich dieser Umstand als besonders vorteilhaft: So ist etwa in dem Falle, dass sich bereits das Elektrofahrzeug auf einem induktiven Ladeplatz befindet, das Elektrofahrzeug lediglich in seiner Längsrichtung ohne großen Aufwand ausrichtbar. Sind bei dem Elektrofahrzeug die Ladespule und eine zur Kommunikation dienende Antenne wie im Stand der Technik bekannt beliebig voneinander beabstandet, so ist eine sichere, eindeutige und zuverlässige Kommunikation für den Ladevorgang nicht ausreichend sichergestellt und lässt sich gegebenenfalls nur durch erneute Ausrichtung des Fahrzeugs erreichen. Ist hingegen eine gute Positionierung hinsichtlich der Kommunikation gegeben, so bedingt dies nicht zugleich eine hinreichende Positionierung der Ladespulen.

Die erfindungsgemäße Ausbildung der Antenne als dielektrische oder elektrische Antenne erlaubt es ferner, die Antenne auch in das induktive magnetische Ladefeld der Ladespulen einzubringen. Eine Antenne, welche stark an die magnetische Komponente des elektromagnetischen Feldes ankoppelt, etwa eine magnetische Antenne wie eine Rahmen- oder Spulenantenne, würde bei den beim induktiven Laden verwendeten Leistungen leicht infolge von Wirbelströmen bedingt durch das induktive Ladefeld beschädigt oder sogar zerstört werden können. Elektrische oder dielektrische Antennen hingegen lassen sich leicht nichtmetallisch oder schleifenfrei ausbilden, sodass die Ausbildung von Wirbelströmen leicht vermeidbar ist. Zugleich kann mit einer solchen Ausbildung der Antenne eine Störung des induktiven Ladefeldes vermieden werden. Der Wirkungsgrad beim induktiven Laden ist daher bei der erfindungsgemäßen Ladeeinrichtung nicht oder nicht notwendig verringert. Mit anderen Worten, ein auf der elektrischen oder dielektrischen Antenne basierendes Kommunikationssystem ist derart robust ausbildbar, dass trotz der beim induktiven Laden üblicherweise genutzten starken elektromagnetischen Felder während des Ladens eine sichere und eindeutige Kommunikation, etwa zur Ladesteuerung und/oder zur Überwachung des Ladevorgangs, gewährleistet ist.

Insbesondere im Falle dielektrischer Antennen ist es bei der erfindungsgemäßen Ladeeinrichtung möglich, mittels dieser Antennen sowohl eine dielektrische Hochfrequenz-Signalübertragung (HF-Signalübertragung) zu erreichen, wobei die Antenne ohne metallische Teile im Leistungsfluss zwischen beiden Ladespulen realisierbar sind. Folglich lassen sich Wirbelströme in der Antenne wirksam vermeiden.

In einer bevorzugten Weiterbildung der Erfindung bildet die induktive Ladeeinrichtung eine Primärseite eines induktiven Ladesystems. Zweckmäßig weist die induktive Ladeeinrichtung einen elektrischen Leitungskontakt auf, mittels welchem die zumindest eine Ladespule der induktiven Ladeeinrichtung mit einer Energiequelle elektrisch kontaktiert oder kontaktierbar ist.

Alternativ und ebenfalls bevorzugt bildet in einer Weiterbildung der Erfindung die induktive Ladeeinrichtung eine Sekundärseite eines induktiven Ladesystems. Zweckmäßig weist die induktive Ladeeinrichtung einen elektrischen Leitungskontakt auf, mittels welchem die zumindest eine Ladespule der induktiven Ladeeinrichtung mit einem Energiespeicher elektrisch kontaktiert oder kontaktierbar ist.

Zweckmäßig weist die erfindungsgemäße induktive Ladeeinrichtung eine elektromagnetische Feldschirmung auf. Dabei sind sowohl die zumindest eine induktive Ladespule als auch die zumindest eine elektrische oder dielektrische Antenne der induktiven Ladeeinrichtung an und/oder nah derselben Seite der Feldschirmung angeordnet.

Vorteilhaft ist bei der erfindungsgemäßen induktiven Ladeeinrichtung die elektrische oder dielektrische Antenne an einem Ort angeordnet, welcher parallel zur Spulenachse verschoben gegenüber einem Ort des geometrischen Schwerpunkts des oder der Spuleninnenbereiche befindlich ist und/oder am geometrischen Schwerpunkt des oder der Ladespuleninnenbereiche befindlich ist. D.h., die elektrische oder dielektrische Antenne ist an einem Ort angeordnet, welcher durch eine Verschiebung eines Ortes des geometrischen Schwerpunkts des oder der Spuleninnenbereiche in einer Richtung parallel zur Spulenachse hervorgeht.

Geeignet weist bei der erfindungsgemäßen induktiven Ladeeinrichtung die elektrische Antenne zumindest eine Dipolantenne auf, welche zumindest einen oder mehrere Dipole umfasst. Vorteilhaft weist die Dipolantenne einen oder mehrere elektrische Dipole auf, welche insbesondere mittels sich fortstreckender Leitungsenden gebildet sind. Die Leitungsenden bilden keine Schleifen aus, sodass eine Ausbildung von Wirbelströmen wirksam vermieden ist.

Bevorzugt weist bei der erfindungsgemäßen induktiven Ladeeinrichtung die dielektrische Antenne zumindest einen, insbesondere dielektrischen, Wellenleiter auf. Auf diese Weise kann die dielektrische Antenne vollständig oder überwiegend metallfrei ausgebildet sein, sodass eine Ausbildung von Wirbelströmen wirksam vermieden ist.

In einer vorteilhaften Weiterbildung der erfindungsgemäßen induktiven Ladeeinrichtung weist die Feldschirmung eine Durchbrechung auf. Der Wellenleiter ist bei der erfindungsgemäßen induktiven Ladeeinrichtung zweckmäßig durch die Durchbrechung hindurchgeführt.

Bevorzugt ist bei der erfindungsgemäßen Ladeeinrichtung die dielektrische Antenne eine dielektrische Resonatorantenne oder die dielektrische Antenne weist eine dielektrische Resonatorantenne auf. Auch bei dielektrischen Resonatorantennen kann, etwa im Vergleich zu einer Patchantenne, die Ausbildung von Wirbelströmen wirksam vermieden werden, da Metallflächen zur Ausbildung von Patchantennen als Anregungselement entfallen.

Das erfindungsgemäße Elektrofahrzeug weist eine induktive Ladeeinrichtung wie vorhergehend beschrieben auf.

Die Ladestation gemäß der Erfindung weist eine induktive Ladeeinrichtung wie zuvor beschrieben auf.

Das erfindungsgemäße Verfahren zum induktiven Laden, insbesondere eines Energiespeichers eines Elektrofahrzeugs, bei welchem eine oder zwei Vorrichtung/en nach einem der vorhergehenden Ansprüche herangezogen wird und wobei mittels der zumindest einen induktiven Ladespule je einer der Vorrichtungen Energie übertragen wird sowie mittels der elektrischen oder dielektrischen Antenne je einer der Vorrichtungen Kommunikationsdaten übertragen werden. Zweckmäßig umfassen die bei dem erfindungsgemäßen Verfahren übertragenen Kommunikationsdaten Daten zur Steuerung und/oder Überwachung des induktiven Ladens, insbesondere der Ladeleistung.

Nachfolgend wird die Erfindung anhand in der Zeichnung dargestellter Ausführungsbeispiele näher erläutert. Es zeigen:
- Fig. 1: eine Anordnung einer erfindungsgemäßen induktiven Ladeeinrichtung mit einer Primärladespule und einer dielektrischen Antenne sowie einer weiteren erfindungsgemäßen induktiven Ladeeinrichtung mit einer Sekundärladespule und einer weiteren dielektrischen Antenne schematisch im Längsschnitt,
- Fig. 2: Ausführungsbeispiele für eine Ausbildung der dielektrischen Antennen der erfindungsgemäßen Ladeeinrichtungen gem. Fig. 1 schematisch im Längsschnitt,
- Fig. 3: einen Ausschnitt einer elektrischen Antenne, welche in einem weiteren Ausführungsbeispiel einer erfindungsgemäßen induktiven Ladeeinrichtung an die Stelle der dielektrischen Antenne der erfindungsgemäßen elektrischen Antenne gem. Fig. 1 tritt, schematisch in einer perspektivischen Darstellung,
- Fig. 4: die elektrische Antenne gem. Fig. 3 schematisch in einer perspektivischen Darstellung,
- Fig. 5: eine dielektrische Resonatorantenne, welche in einem weiteren Ausführungsbeispiel einer erfindungsgemäßen induktiven Ladeeinrichtung an die Stelle der dielektrischen Antenne der erfindungsgemäßen dielektrischen Antenne gem. Fig. 1 tritt, schematisch im Längsschnitt,
- Fig. 6: eine alternative dielektrische Resonatorantenne, welche in einem weiteren Ausführungsbeispiel einer erfindungsgemäßen induktiven Ladeeinrichtung an die Stelle der dielektrischen Antenne der erfindungsgemäßen dielektrischen Antenne gem. Fig. 1 tritt, schematisch im Längsschnitt sowie
- Fig. 7: ein weiteres Ausführungsbeispiel einer erfindungsgemäßen induktiven Ladeeinrichtung mit zwei Ladespulen und einer zwischen den Ladespulen angeordneten dielektrischen Antenne schematisch im Querschnitt.

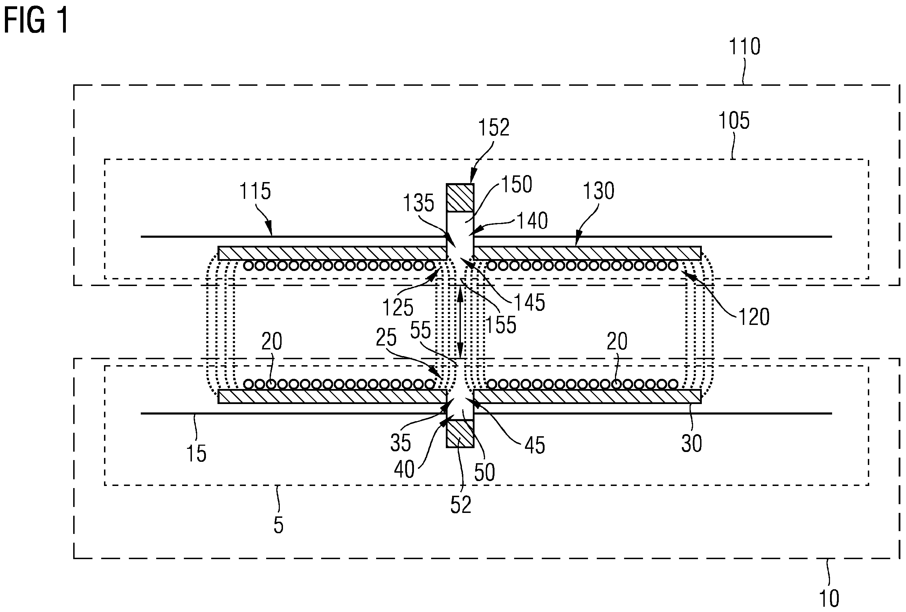

Die in Fig. 1 dargestellte Anordnung umfasst zum einen eine erfindungsgemäße induktive Ladeeinrichtung 5 einer Ladestation 10 (nicht vollumfänglich dargestellt) für Elektroautos:
Die Ladeeinrichtung 5 der Ladestation 10 weist eine flächig und eben ausgebildete elektromagnetische Schirmung 15 auf. Die Schirmung 15 erstreckt sich im in Fig. 1 dargestellten Ausführungsbeispiel mit ihren flächigen Erstreckungen parallel zum Erdboden (nicht explizit dargestellt). Oberhalb der Schirmung 15 ist eine Ladespule in Gestalt einer Flachspule 20 angeordnet. Die Flachspule 20 bildet eine primärseitige Ladespule zum Laden einer Elektrobatterie (nicht explizit dargestellt) eines Elektroautos 110. Das Elektroauto befindet sich in der Darstellung gem. Fig. 1 genau über der Ladestation. Eine Windungsebene der Flachspule 20 verläuft in der Darstellung gem. Fig.1 parallel zum Erdboden und somit parallel zur flächigen Erstreckung der Schirmung 15. Entlang dieser Windungsebene umlaufen Drahtwindungen der Flachspule 20 einen Spuleninnenbereich 25 mit einem in Richtungen parallel zum Erdboden verlaufenden Querschnitt in Gestalt eines Quadrats mit gerundeten Ecken (in nicht eigens dargestellten Ausführungsbeispielen kann der Querschnitt auch anders geformt sein). Zwischen Flachspule 20 und Schirmung 15 ist an der Flachspule 20 eine feldleitende Ferritschicht 30 angeordnet. Die Ferritschicht 30 ist als Flachteil ausgebildet, dessen flächige Erstreckungen sich parallel zur Windungsebene der Flachspule 20 erstrecken. Fluchtend mit der dem Spuleninnenbereich 25 weisen Ferritschicht 30 und Schirmung 15 jeweils Durchbrechungen 35, 40 auf.

Die Anordnung gem. Fig. 1 umfasst ferner eine sekundärseitige induktive Ladeeinrichtung 105 eines Elektroautos 110. Die induktive Ladeeinrichtung 105 des Elektroautos 110 umfasst gleichartig der Ladeeinrichtung 5 der Ladestation 10 eine sich eben und flächig erstreckende Schirmung 115, eine als Flachspule 120 ausgebildete sekundärseitige Ladespule mit einem Spuleninnenbereich 125 sowie eine feldleitende Ferritschicht 130, wobei auch die Schirmung 115 und die Ferritschicht 130 mit dem Spuleninnenbereich 125 fluchtende Durchbrechungen 135, 140 aufweisen. Schirmung 115, Flachspule 120 sowie die Ferritschicht 130 der Ladeeinrichtung 105 des Elektroautos 110 sind dabei gleichartig der Schirmung 15, Flachspule 20 sowie der Ferrichtschicht 30 der Ladeeinrichtung 5 der Ladestation 10 ausgebildet und zu diesen spiegelbildlich (hinsichtlich einer gedachten und parallel zum Erdboden verlaufenden Spiegelebene) angeordnet. Die Spulenachsen (nicht im Einzelnen dargestellt) der Flachspule 20 der Ladestation 10 und der Flachspule 120 des Elektroautos 110 verlaufen zueinander fluchtend und senkrecht zum Erdboden.

In der Darstellung gem. Fig. 1 befindet sich das Elektroauto 110 infolge dieser zueinander fluchtenden Anordnung der Spulenachsen in einer zum induktiven Laden geeigneten Position. Die Spulenachsen verlaufen in Fig. 1 jeweils vertikal und zentrisch durch die Spuleninnenbereiche 25, 125 hindurch.

Bei der primärseitigen induktiven Ladeeinrichtung 5 der Ladestation 10 ist die Flachspule 20 zu ihrer Bestromung mit einem Stromnetz (nicht dargestellt) elektrisch leitend verbunden.

Bei der sekundärseitigen induktiven Ladeeinrichtung 105 des Elektroautos 110 ist die Flachspule 120 mit einer elektrischen Batterie (nicht dargestellt) des Elektroautos 110 elektrisch leitend verbunden.

In einem ersten Ausführungsbeispiel wie in Fig. 1 dargestellt weisen sowohl die primärseitige Ladeeinrichtung 5 als auch die sekundärseitige induktive Ladeeinrichtung 105 jeweils eine dielektrische Antenne 45, 145 auf.

Die dielektrische Antennen 45, 145 umfassen in diesem Ausführungsbeispiel jeweils einen Wellenleiter 50, 150. Der Wellenleiter 50 der primärseitigen Ladeeinrichtung 5 ist durch die zueinander fluchtenden Durchbrechungen 35, 40 von Schirmung 15 und Ferritschicht 30 mit seiner Längserstreckung senkrecht zum Erdboden orientiert hindurchgeführt. Der Wellenleiter 50 ist auf der von der Flachspule 20 abgewandten Flachseite der Schirmung 15 mit einer Speiseeinrichtung 52 zur Speisung mit einem elektromagnetischen Hochfrequenzfeld zur Kommunikation mit der sekundärseitigen dielektrischen Antenne 145 der sekundärseitigen Ladeeinrichtung 105 verbunden (in Fig. 1 nicht explizit dargestellt). Der Wellenleiter 50 weist an seinem Längsende, welches sich an der der Flachspule 20 zugewandten Seite der Schirmung 15 von dieser Seite der Schirmung 15 fortstreckt, eine Auskopplung 55 auf. Die Auskopplung 55 bildet folglich eine Quelle für das elektromagnetische Hochfrequenzfeld, sodass der gespeiste Wellenleiter 50 mit der Auskopplung 55 als dielektrische Antenne bezeichnet wird.

Analog ist der Wellenleiter 150 der sekundärseitigen Ladeeinrichtung 105 durch die zueinander fluchtenden Durchbrechungen 135, 140 von Schirmung 115 und Ferritschicht 130 mit seiner Längserstreckung senkrecht zum Erdboden orientiert hindurchgeführt. Der Wellenleiter 150 weist an seinem Längsende, welches sich an der der Flachspule 120 zugewandten Seite der Schirmung 115 von dieser Seite der Schirmung 115 fortstreckt, eine Einkopplung 155 auf. Die Einkopplung 155 bildet folglich eine Senke für das elektromagnetische Hochfrequenzfeld, sodass der Wellenleiter 150 mit der Einkopplung 155 ebenfalls als dielektrische Antenne, hier eine Empfangsantenne, bezeichnet wird. Der Wellenleiter 150 ist auf der von der Flachspule 120 abgewandten Flachseite der Schirmung 115 mit einer Empfangselektronik 152 zur Verarbeitung der von dem Wellenleiter 150 geführten eingekoppelten elektromagnetischen Wellen verbunden.

In einem weiteren Ausführungsbeispiel, welches im Übrigen dem oben beschriebenen Ausführungsbeispiel entspricht, sind ferner sowohl die dielektrische Antenne 45 der primärseitigen Ladeeinrichtung 5 als auch die dielektrische Antenne 145 der sekundärseitigen Ladeeinrichtung 105 jeweils mit einer Speiseeinrichtung zur Speisung mit einem elektromagnetischen Hochfrequenzfeld zur Kommunikation als auch mit einer Empfangselektronik zur Verarbeitung der vom jeweiligen Wellenleiter 50, 150 der jeweiligen dielektrischen Antenne 45, 145 verbunden; d.h. in diesem Ausführungsbeispiel arbeiten sowohl die dielektrische Antenne 45 der primärseitigen Ladeeinrichtung 5 als auch die Antenne 145 der sekundärseitigen Ladeeinrichtung 105 zugleich als Sendeantenne als auch als Empfangsantenne. In diesem Ausführungsbeispiel ist daher eine bidirektionale Kommunikation von primärseitiger Ladeeinrichtung 5 und sekundärseitiger Ladeeinrichtung 105 ermöglicht.

Beispielsweise ist bei dem vorhergehend beschriebenen Ausführungsbeispiel die Polarisation der elektromagnetischen Wellen bei der Einkopplung in den jeweiligen Wellenleiter 50, 150 der dielektrischen Antennen 45, 145 derart gewählt, dass diese Polarisation senkrecht zur Wicklungsebene der Flachspulen 20, 120 orientiert ist, da das Feld bei dieser Polarisationsrichtung bereits stark in die Flachspule hineinragt. Falls sich die Flachspulen 20, 120 wie in Fig. 1 dargestellt in der Strahlrichtung der dielektrischen Antennen 45, 145 befinden, wirken diese zwar näherungsweise jeweils als Gitterpolarisator. Dennoch sollte die jeweilige Flachspule 20, 120 bei dieser Polarisation dennoch keine große Dämpfung der elektromagnetischen Wellen bedingen, wenn die Wellen die Flachspulen 20, 120 durchlaufen.

Das Material der dielektrischen Wellenleiter 50, 150 der oben beschriebenen Ausführungsbeispiele ist z. B. Teflon mit einer vergleichsweise geringen Dielektrizitätskonstante ***εᵣ*** (*εᵣ* < 2,5). Beispielsweise sind die Wellenleiter 50, 150 jeweils kreiszylinderförmig ausgebildet mit einem Kreisdurchmesser von ¹/_{Zλ} (z. B. bei vorgesehener Kommunikation mittels der dielektrischen Antennen 45, 145 im CAR2X-Band bei 5,8 GHz etwa ein Kreisdurchmesser von 3 cm). In weiteren Ausführungsbeispielen kann der Kreisdurchmesser aber auch größer sein. Messungen mit einem aus Teflon gefertigten Wellenleiter 50, 150 mit einem Kreisdurchmesser des Wellenleiters 50 , 150 von 3 cm bei 5,8 GHz haben gezeigt, dass die Richtwirkung der dielektrischen Antennen 45, 145 sehr hoch ist, da hier nahezu ebene Wellenfronten vorliegen.

In weiteren, nicht eigens dargestellten Ausführungsbeispielen, welche im Übrigen den vorhergehend beschriebenen Ausführungsbeispielen entsprechen, sind die Wellenleiter 50, 150 der dielektrischen Antennen 45, 145 aus einem dielektrischen Material, etwa einem keramischen Material, mit einer deutlich höheren Dielektrizitätskonstante ausgebildet, beispielsweise mit einer Dielektrizitätskonstante von bis zu 140. In diesen Ausführungsbeispielen ist der Wellenleiter mit einem korrespondierend zur höheren Dielektrizitätskonstante erheblich geringeren Kreisdurchmesser ausgebildet.

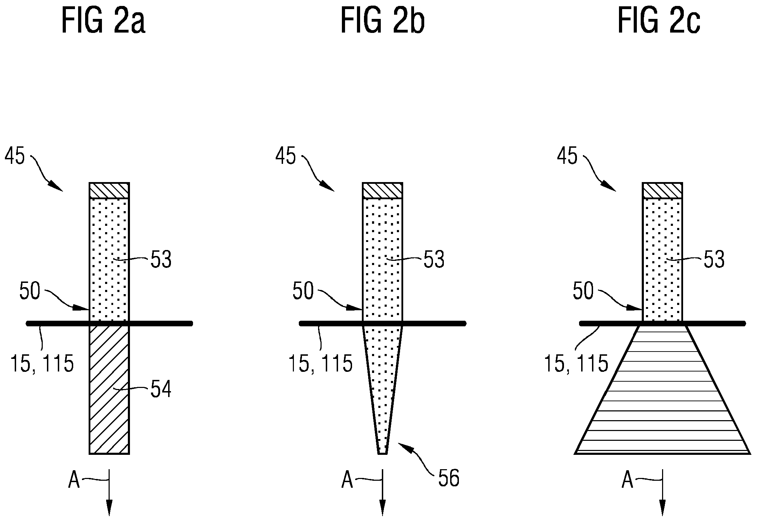

In weiteren Ausführungsbeispielen, welche im Übrigen den zuvor beschriebenen Ausführungsbeispielen entsprechen, ist die Einkopplung 155 oder Auskopplung 55 der Wellenleiter 50, 150 der dielektrischen Antennen 45, 145 wie in Fig. 2 dargestellt ausgebildet:
So besteht in einem ersten in Fig. 2 dargestellten Ausführungsbeispiel der Wellenleiter 50, 150 auf derjenigen Seite der Schirmung 15, 115, welche jeweils der zu der jeweiligen induktiven Ladeeinrichtung 5, 105 gehörigen Flachspule 20, 120 abgewandt ist, aus einem ersten dielektrischen Material 53 und auf derjenigen Seite, welche jeweils der zu der jeweiligen induktiven Ladeeinrichtung 5, 105 gehörigen Flachspule 20, 120 zugewandt ist, aus einem zweiten dielektrischen Material 54 (Fig. 2 a). In diesem Ausführungsbeispiel weist das zweite dielektrische Material 54 eine geringere Dielektrizitätskonstante auf als das zweite dielektrische Material 54. Der Durchmesser des Wellenleiters 50, 150 hingegen bleibt bei dem in Fig. 2 a dargestellten Ausführungsbeispiel unverändert. Auf diese Weise kann eine hohe Richtwirkung der dielektrischen Antenne 45, 145 in eine Abstrahlrichtung A erreicht werden. Aufgrund der höheren Dielektrizitätskonstante des ersten Materials 53 ist das Feld jedoch zur Führung im Bereich der Durchbrechungen 40, 140 der Schirmung 15, 115 hinreichend im Wellenleiter 50, 150 lokalisiert geführt.

Im einem zweiten in Fig. 2 dargestellten Ausführungsbeispiel (Fig. 2 b) besteht der Wellenleiter 50, 150 beiderseits der Schirmung 15, 115 aus demselben dielektrischen Material 53. Jedoch verringert sich der Durchmesser des Wellenleiters 50, 150 auf derjenigen Seite, welche jeweils der zu der jeweiligen induktiven Ladeeinrichtung 5, 105 gehörigen Flachspule 20, 120 zugewandt ist mit zunehmendem Abstand von der Schirmung 15, 115 derart, dass der Wellenleiter 50, 150 im Bereich der Einkopplung 155 oder Auskopplung 55 eine Spitze 56 ausbildet. Auch auf diese Weise wird eine hohe Richtwirkung der dielektrischen Antenne 45, 145 in eine Abstrahlrichtung A erreicht. Aufgrund des größeren Durchmessers des Wellenleiters 50, 150 auf der der zur jeweiligen Ladeeinrichtung 5, 105 gehörigen Flachspule 20, 120 abgewandten Seite der Schirmung 15, 115 ist das Feld jedoch zur Führung im Bereich der Durchbrechungen 40, 140 der Schirmung 15, 115 hinreichend im Wellenleiter 50, 150 lokalisiert geführt.

In einem dritten in Fig. 2 dargestellten Ausführungsbeispiel besteht der Wellenleiter 50, 150 auf derjenigen Seite der Schirmung 15, 115, welche jeweils der zu der jeweiligen induktiven Ladeeinrichtung 5, 105 gehörigen Flachspule 20, 120 abgewandt ist, aus einem ersten dielektrischen Material und auf derjenigen Seite, welche jeweils der zu der jeweiligen induktiven Ladeeinrichtung 5, 105 gehörigen Flachspule 20, 120 zugewandt ist, aus einem zweiten dielektrischen Material (Fig. 2 c). In diesem Ausführungsbeispiel weist das zweite dielektrische Material eine geringere Dielektrizitätskonstante auf als das zweite dielektrische Material. Der Durchmesser des Wellenleiters 50, 150 weitet sich auf derjenigen Seite, welche jeweils der zu der jeweiligen induktiven Ladeeinrichtung 5, 105 gehörigen Flachspule 20, 120 zugewandt ist in Richtung von der Schirmung 15, 115 weg auf. Auch auf diese Weise kann eine hohe Richtwirkung der dielektrischen Antenne 45, 145 in eine Abstrahlrichtung A erreicht werden. Aufgrund der höheren Dielektrizitätskonstante des ersten Materials ist das Feld jedoch zur Führung im Bereich der Durchbrechungen 40, 140 der Schirmung 15, 115 hinreichend im Wellenleiter 50, 150 lokalisiert geführt.

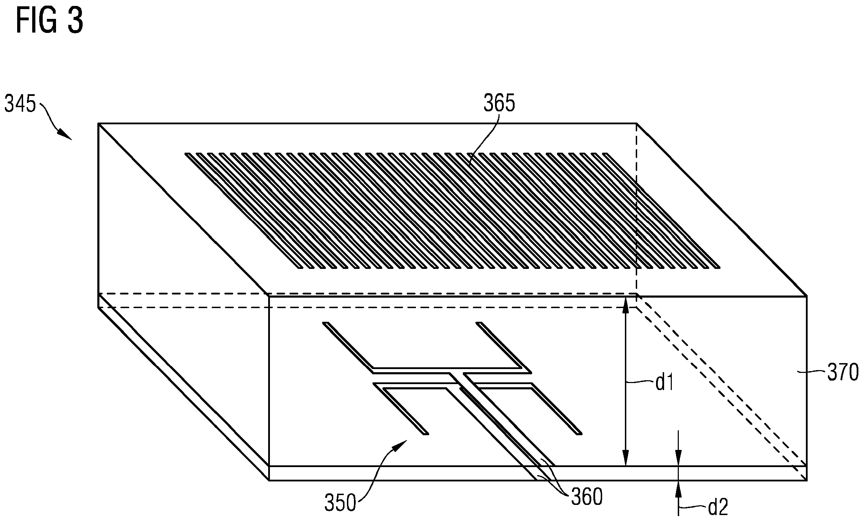

Das weitere, in Fig. 3 dargestellte Ausführungsbeispiel der erfindungsgemäßen Ladeeinrichtungen 5, 105 entspricht den zu Fig. 1 erläuterten Ausführungsbeispielen. Im Unterschied zu diesen Ausführungsbeispielen ist jedoch anstelle einer dielektrischen Antenne 45, 145 jeweils eine elektrische Antenne 345 vorgesehen.

Die elektrische Antenne 345 umfasst ein 8-faches Dipolarray 350 mit zweikomponentigen Dipolelementen 355 und zwei zu den jeweiligen Komponenten der Dipolelemente 355 führende symmetrische Signalzuleitungen 360, die voneinander in Richtung der Spulenachsen der Flachspulen 20, 120 um d2 = 0,25 Millimeter beabstandet sind (in anderen Ausführungsbeispielen kann der Abstand d2 abweichen). Die Dipolelemente 355 weisen jeweils zwei Dipolkomponenten auf, die jeweils an einer der symmetrischen Signalzuleitungen 360 angebunden sind. Die beiden Dipolkomponenten jeweils eines Dipolelementes 355 sind mittels jeweils eines sich von der Signalzuleitung 360 fortstreckenden Drahtes gebildet. Dabei strecken sich die beiden Dipolkomponenten jeweils eines Dipolelementes 355 voneinander in zueinander parallelen Orientierung weg. Die Orientierungen der Dipolkomponenten sämtlicher Dipolelemente 355 erstrecken sich je abgedeckter Polarisationsebene der Antenne 345 zueinander parallel.

Ferner umfasst die elektrische Antenne 345 einen streifenförmig aufgebauten Reflektor 365. Der Reflektor 365 umfasst parallel zueinander in einer zur Wicklungsebene der zur jeweiligen Ladeeinrichtung 5, 105 zugehörigen Flachspule 20, 120 parallelen Ebene angeordnete Metallstreifen mit einer Breite jeweils im Millimeterbereich oder mit einer geringeren Breite. Die Streifen verlaufen dabei parallel zu den Erstreckungen der Dipolelemente 355.

Das Dipolarray 350 ist als Flachteil ausgebildet, deren Erstreckungsebene sich parallel zur Wicklungsebene der zur jeweiligen Ladestation 5, 105 gehörigen Flachspule 20, 120 erstreckt.

Dipolarray 350 und Reflektor 365 sind in ein dielektrisches Substrat 370 eingebettet, welches eine Dielektrizitätskonstante von 10,2 aufweist. Der Abstand des Reflektors zu den Dipolelementen beträgt d1 = 2,5 Millimeter, entsprechend einem Zwanzigstel der Freiraumwellenlänge, zu dessen Abstrahlung oder Empfang die jeweilige elektrische Antenne 45, 145 ausgebildet ist. In weiteren Ausführungsbeispielen können der Abstand d1 und die Dielektrizitätskonstante abweichen.

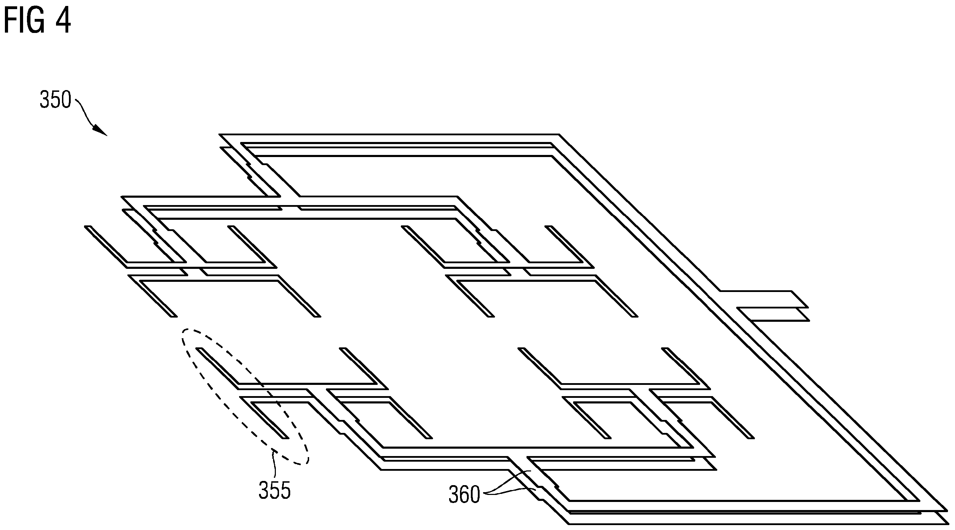

Die Leistungsteiler des Dipolarrays können als T-Verzweigung (T-junction power divider) wie in Fig. 4 dargestellt, oder z. B. auch als Wilkinson-Teiler mit symmetrischer Leitungsführung (nicht eigens in der Zeichnung dargestellt) ausgeführt werden. In einem weiteren Ausführungsbeispiel (nicht gesondert in der Zeichnung gezeigt) sind als Dipolelemente 355 Faltdipole vorgesehen, die eine hohe Impedanz aufweisen. Hier sind die Leitungen des Array einfach derart zusammengeschlossen (wodurch sich die Impedanz halbiert), dass die Impedanz im Bereich von 50 Ohm liegt. Zur Verringerung von induzierten Schleifenströmen in den Faltdipolen können diese mit einem Serienkondensator ausgeführt sein. Die elektrische Antenne 345 ist mittels eines Baluns, gegebenenfalls nach einer Anpassung auf 50 Ohm, mit einem Koaxialkabel verbunden.

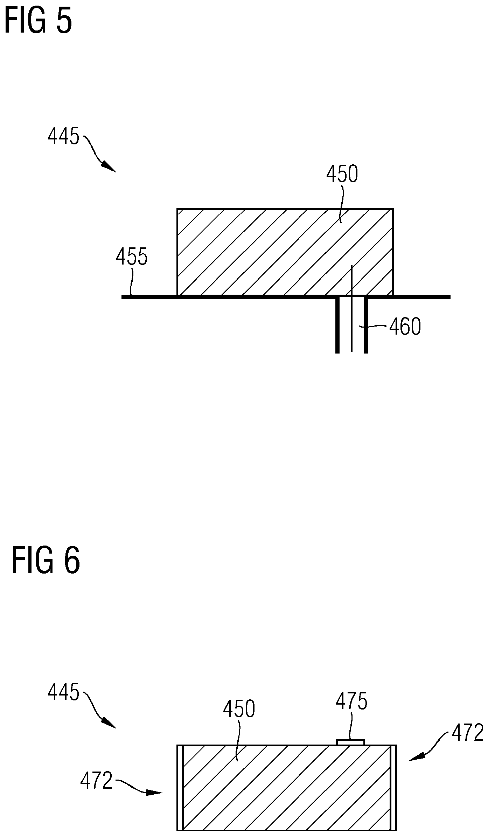

Die in den Figuren 5 und 6 dargestellten dielektrischen Antennen 445, welche in den nachfolgend beschriebenen Ausführungsbeispielen der erfindungsgemäßen Ladeeinrichtungen 5, 105 die Rolle der zuvor beschriebenen Antennen 45, 145, 345 übernehmen, sind als dielektrische Resonatorantennen 445 ausgebildet. Im Übrigen entsprechen die im Zusammenhang mit den Fig. 5 und 6 erläuterten Ausführungsbeispiele denjenigen, welche zur Fig. 1 bereits erläutert worden sind. Das abstrahlende Element der dielektrischen Resonatorantennen 445 bildet jeweils in an sich bekannter Weise ein dielektrischer Resonator 450, welcher durch Speisung mit geeigneter Wellenlänge und Polarisierung in Resonanz betreibbar ist und im gezeigten Ausführungsbeispiel in Resonanz betrieben wird. Die Abmessungen des dielektrischen Resonators 450 der dielektrischen Resonatorantenne 445 liegen in den in Fig. 5 und 6 gezeigten Ausführungsbeispielen im Bereich von wenigen Millimetern.

Die Resonanzfrequenz ist von der Dielektrizitätskonstante *εᵣ* des Materials abhängig und bestimmt somit auch die Abmessungen des dielektrischen Resonators 450 der dielektrischen Resonatorantenne 445. Die Abmessung ist in den in Fig. 5 und 6 dargestellten Ausführungsbeispielen in der Größenordnung von λ/√2, wobei λ die Wellenlänge im Freiraum angibt.

Beispielsweise weist der dielektrische Resonator 450 der dielektrischen Resonatorantenne 445 die Form eines Zylinders, insbesondere eines Kreiszylinders, oder eines Quaders auf. Im in Fig. 5 dargestellten Ausführungsbeispiel ist die dielektrische Resonatorantenne 445 auf einer Massefläche 455 montiert. Die dielektrische Resonatorantenne 445 wird über einen Koaxialleiter 460 gespeist. Dabei streckt sich in dem gezeigten Ausführungsbeispiel der Koaxialleiter 460 von der Schirmung 15, 115 zu derjenigen Seite, welche von der zur jeweiligen Ladeeinrichtung 5, 105 gehörenden Flachspule 20, 120 abgewandt ist, fort. Die Massefläche 455 erstreckt sich flächig und eben in der Erstreckungsebene der Schirmung 15, 115, mithin in der in Fig. 1 dargestellten Anordnung parallel zum Erdboden.

In weiteren, nicht gesondert gezeigten Ausführungsbeispielen sind andere Speisungsvarianten realisiert. Diese anderen Speisungsvarianten umfassen beispielsweise in an sich bekannter Weise Schlitzkopplungen auf Basis von Mikrostreifenleitungen.

Im in Fig. 6 dargestellten Ausführungsbeispiel ist die dielektrische Resonatorantenne 445 als sogenannte metallisierte dielektrische Resonatorantenne 445 ausgebildet, die ohne Massefläche 455 realisiert ist. Hierbei sind diejenigen Seiten 472 des dielektrischen Resonators 450 der dielektrischen Resonatorantenne 445, welche sich jeweils senkrecht zu den flächigen Erstreckungsrichtungen der Schirmung 15, 115, also senkrecht zur Wicklungsebene der Flachspule 20, 120, der jeweiligen zugehörigen Ladeeinrichtung 5, 105 erstrecken, metallisiert. Ferner weist die dielektrische Resonatorantenne einen metallischen Speisepunkt 475 an einer Stirnseite des dielektrischen Resonators 450 auf. Eine Ausbildung von Wirbelströmen ist auch in dieser Anordnung besonders wirksam vermieden.

In einem weiteren Ausführungsbeispiel ist die dielelektrische Antenne 445 gem. Fig. 6 jeweils in dem Spuleninnenbereich 25, 125 der Flachspule 20, 120 der jeweiligen Ladeeinrichtung 5, 105 angeordnet.

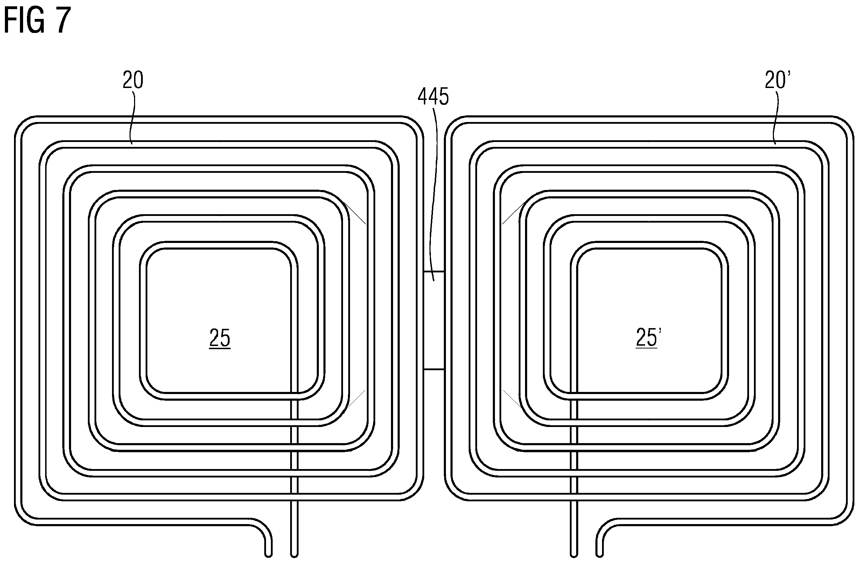

Im in Fig. 7 dargestellten Ausführungsbeispiel, welches im Übrigen den zuvor erläuterten Ausführungsbeispielen mit einer dielektrischen Resonatorantenne 445 entspricht, sind bei der primärseitigen Ladeeinrichtung 5 anstelle einer einzigen Flachspule 20 jeweils zwei Flachspulen 20, 20' vorhanden (in einem weiteren Ausführungsbeispiel ist die sekundärseitige Ladeeinrichtung 105 auf spiegelbildliche Weise mit zwei Flachspulen ausgebildet, sodass die Ausführungen dieses Ausführungsbeispiels auch auf eine entsprechend ausgebildete sekundärseitige Ladeeinrichtung in entsprechender Weise zutreffen). Die dielektrische Resonatorantennne 445 ist dabei zwischen den Flachspulen 20, 20' angeordnet und weist Abmessungen von wenigen Millimetern auf. Der Spuleninnenbereich der Flachspulen 20, 20' weist Abmessungen von 200 mal 200 Millimetern auf. Die äußeren Abmessungen jeder einzelnen Flachspule 20, 20' betragen 500 Millimeter.

Das erfindungsgemäße Elektroauto 110 weist die sekundärseitige induktive Ladeeinrichtung 105 wie in den vorhergehenden Ausführungsbeispielen näher erläutert auf.

Die Ladestation 10 gemäß der Erfindung umfasst die primärseitige induktive Ladeeinrichtung 5 wie in den vorhergehenden Ausführungsbeispielen näher erläutert und ist zum Laden eines Elektroautos 110 ausgebildet.

Mittels der zuvor beschriebenen erfindungsgemäßen primärseitigen Ladeeinrichtung 5 und der erfindungsgemäßen sekundärseitigen Ladeeinrichtung 105 wird erfindungsgemäß mittels der induktiven Flachspule 20 der primärseitigen Ladeeinrichtung 5 und der induktiven Flachspule 120 der sekundärseitigen Ladeeinrichtung 105 Energie zwischen primärseitiger Ladeeinrichtung 5 und sekundärseitiger Ladeeinrichtung 105 übertragen. Während dieser Energieübertragung werden mittels der jeweiligen elektrischen 345 oder dielektrischen Antennen 45, 145, 445 von primärseitiger Ladeeinrichtung 5 und sekundärseitiger Ladeeinrichtung 105 zwischen primärseitiger Ladeeinrichtung 5 und sekundärseitiger Ladeeinrichtung 105 Kommunikationsdaten übertragen.

In den zu den Figuren 1 bis 6 erläuterten Ausführungsbeispielen befindet sich die Antenne zumindest zum Teil an einem Ort innerhalb der Flachspule 20, 120. In weiteren, nicht eigens dargestellten Ausführungsbeispielen, welche im Übrigen den in Fig. 1 bis 6 dargestellten Ausführungsbeispielen entsprechen, befindet sich der geometrische oder physikalische Schwerpunkt der Antenne innerhalb der jeweiligen Flachspule 20, 120. In den zur Fig. 7 erläuterten Ausführungsbeispielen befindet sich die Antenne zumindest zum Teil an dem geometrischen Schwerpunkt der Innenbereiche 25, 25' der Flachspulen 20, 20'. In weiteren, nicht eigens dargestellten Ausführungsbeispielen ist die Antenne gegenüber diesem Schwerpunkt in Richtung der Spulenachse von Schirmung 15 und Ferritschicht 30 weg verschoben.

## Patentansprüche

1. Induktive Ladeeinrichtung (5, 105), welche eine Primärseite (5) eines induktiven Ladesystems oder eine Sekundärseite (105) eines induktiven Ladesystems bildet, aufweisend zumindest eine oder mehrere um eine Spulenachse gewundene induktive Ladespule/n (20, 120) sowie eine elektrische oder dielektrische Antenne (45, 145, 345, 445),
**gekennzeichnet dadurch, dass** die Antenne in oder an der zumindest einen Ladespule und/oder innerhalb der zumindest einen Ladespule angeordnet ist und/oder zwischen den mehreren Ladespulen angeordnet ist und/oder an einem Ort angeordnet ist, welcher parallel zur Spulenachse der Ladespule oder zumindest einer der Ladespulen verschoben gegenüber einem Ort eines Bereichs der Ladespule und/oder einem Ort innerhalb der zumindest einen Ladespule und/oder einem Ort zwischen den mehreren Ladespulen befindlich ist.

2. Induktive Ladeeinrichtung nach Anspruch 1, aufweisend eine elektromagnetische Feldabschirmung (30, 130), bei welcher sowohl die zumindest eine induktive Ladespule als auch die elektrische oder dielektrische Antenne an derselben Seite der Feldschirmung angeordnet sind.

3. Induktive Ladeeinrichtung nach einem der vorhergehenden Ansprüche, bei welcher die elektrische oder dielektrische Antenne an einem Ort angeordnet ist, welcher parallel zur Spulenachse verschoben gegenüber einem Ort des geometrischen Schwerpunkts des oder der Ladespuleninnenbereiche befindlich ist und/oder am geometrischen Schwerpunkt des oder der Ladespuleninnenbereiche befindlich ist.

4. Induktive Ladeeinrichtung nach einem der vorhergehenden Ansprüche, bei welcher die elektrische Antenne zumindest eine Dipolantenne, umfassend zumindest einen oder mehrere Dipole, aufweist.

5. Induktive Ladeeinrichtung nach einem der Ansprüche 1 bis 3, bei welcher die dielektrische Antenne zumindest einen Wellenleiter aufweist.

6. Induktive Ladeeinrichtung nach den Ansprüchen 2 und 5, bei welcher die Feldschirmung eine Durchbrechung aufweist, durch welche der Wellenleiter hindurchgeführt ist.

7. Induktive Ladeeinrichtung nach einem der Ansprüche 1 bis 3 oder 5 oder 6, bei welcher die dielektrische Antenne eine dielektrische Resonatorantenne ist oder aufweist.

8. Elektrofahrzeug (110) mit einer induktiven Ladeeinrichtung nach einem der vorhergehenden Ansprüche

9. Ladestation (10) mit einer induktiven Ladeeinrichtung nach einem der Ansprüche 1 bis 7.

10. Verfahren zum induktiven Laden, insbesondere eines Energiespeichers eines Elektrofahrzeugs, bei welchem eine oder zwei Ladeeinrichtung/en nach einem der vorhergehenden Ansprüche herangezogen wird/werden und wobei mittels der zumindest einen induktiven Ladespule der oder je einer der Ladeeinrichtungen Energie übertragen wird sowie mittels der elektrischen oder dielektrischen Antenne der oder je einer der Ladeeinrichtungen Kommunikationsdaten übertragen werden.

## Claims

1. Inductive charging device (5, 105), which forms a primary side (5) of an inductive charging system or a secondary side (105) of an inductive charging system, having at least one inductive charging coil or a plurality of inductive charging coils (20, 120) wound around a coil axis, and having an electric or dielectric antenna (45, 145, 345, 445), **characterized in that** the antenna is arranged in or on the at least one charging coil and/or within the at least one charging coil and/or between the plurality of charging coils and/or at a location which is displaced, in parallel to the coil axis of the charging coil or at least one of the charging coils, in relation to a location in a region of the charging coil and/or in relation to a location within the at least one charging coil and/or in relation to a location between the plurality of charging coils.

2. Inductive charging device according to Claim 1, having an electromagnetic field screening (30, 130), in which both the at least one inductive charging coil and the electric or dielectric antenna are arranged on the same side of the field screening.

3. Inductive charging device according to one of the preceding claims, in which the electric or dielectric antenna is arranged at a location which is displaced, in parallel to the coil axis, in relation to a location of the geometrical centre of gravity of the charging coil interior region(s) and/or at the geometrical centre of gravity of the charging coil interior region(s).

4. Inductive charging device according to one of the preceding claims, in which the electric antenna has at least one dipole antenna, comprising at least one or more dipoles.

5. Inductive charging device according to one of Claims 1 to 3, in which the dielectric antenna has at least one waveguide.

6. Inductive charging device according to Claims 2 and 5, in which the field screening is provided with a penetration, through which the waveguide is routed.

7. Inductive charging device according to one of Claims 1 to 3 or 5 or 6, in which the dielectric antenna is or has a dielectric resonator antenna.

8. Electric vehicle (110) with an inductive charging device according to one of the preceding claims.

9. Charging station (10) with an inductive charging device according to one of Claims 1 to 7.

10. Method for inductive charging, specifically of an energy storage device in an electric vehicle, in which one or two charging device(s) according to one of the preceding claims is/are used and wherein, by means of the at least one inductive charging coil, energy is transmitted to the or each one of the charging devices and, by means of the electric or dielectric antenna, communication data are transmitted to the or each one of the charging devices.

## Revendications

1. Dispositif de charge par induction (5, 105) formant un côté primaire (5) d'un système de charge par induction ou un côté secondaire (105) d'un système de charge par induction et présentant au moins une ou plusieurs bobine(s) de charge par induction (20, 120) enroulée (s) sur un axe de bobine, et une antenne électrique ou diélectrique (45, 145, 345, 445),
**caractérisé en ce que** l'antenne est agencée dans ou sur la au moins une bobine de charge et/ou à l'intérieur de la au moins une bobine de charge et/ou est agencée entre la pluralité de bobines de charge et/ou est agencée au niveau d'un emplacement décalé de manière parallèle à l'axe de bobine de la bobine de charge ou d'au moins une des bobines de charge vis-à-vis d'un emplacement d'une région de la bobine de charge et/ou d'un emplacement à l'intérieur de la au moins une bobine de charge et/ou d'un emplacement entre la pluralité de bobines de charge.

2. Dispositif de charge par induction selon la revendication 1, présentant un blindage électromagnétique (30, 130) dans lequel la au moins une bobine de charge par induction et l'antenne électrique ou diélectrique sont agencées sur le même côté du blindage.

3. Dispositif de charge par induction selon l'une quelconque des revendications précédentes, dans lequel l'antenne électrique ou diélectrique est agencée au niveau d'un emplacement décalé de manière parallèle à l'axe de bobine vis-à-vis d'un emplacement du centre de gravité géométrique de la ou des région(s) intérieure(s) de bobine de charge et/ou au niveau du centre de gravité géométrique de la ou des région(s) intérieure(s) de bobine de charge.

4. Dispositif de charge par induction selon l'une quelconque des revendications précédentes, dans lequel l'antenne électrique présente au moins une antenne dipolaire comprenant au moins un ou plusieurs dipôle(s).

5. Dispositif de charge par induction selon l'une quelconque des revendications 1 à 3, dans lequel l'antenne diélectrique présente au moins un guide d'ondes.

6. Dispositif de charge par induction selon les revendications 2 et 5, dans lequel le blindage présente une ouverture à travers laquelle passe le guide d'ondes.

7. Dispositif de charge par induction selon l'une quelconque des revendications 1 à 3 ou 5 ou 6, dans lequel l'antenne diélectrique est ou présente une antenne diélectrique à résonateur.

8. Véhicule électrique (110) comprenant un dispositif de charge par induction selon l'une quelconque des revendications précédentes.

9. Station de charge (10) comprenant un dispositif de charge par induction selon l'une quelconque des revendications 1 à 7.

10. Procédé de charge par induction, en particulier d'un accumulateur d'énergie d'un véhicule électrique, dans lequel un ou deux dispositif(s) de charge selon l'une quelconque des revendications précédentes est ou sont utilisé(s) et dans lequel de l'énergie est transmise au moyen de la au moins une bobine de charge par induction du dispositif de charge ou de l'un des dispositifs de charge et des données de communication sont transmises au moyen de l'antenne électrique ou diélectrique du dispositif de charge ou de l'un des dispositifs de charge.
